# EUROPEAN PATENT APPLICATION

(11) **EP 3 651 026 A1**
(43) Date of publication of application: **13.05.2020**
(21) Application number: 18858880.0
(22) Date of filing: 13.09.2018
(51) Int. Cl.: G06F 13/38, G06F 3/00, G06F 13/42, G06K 7/00, G06K 19/07

(54) **INFORMATION RECORDING DEVICE, ACCESS DEVICE, AND ACCESS METHOD**

(30) Priority: 22.09.2017 JP 2017182543
(71) Applicant: Panasonic Intellectual Property Management Co., Ltd., Osaka-shi, Osaka 540-6207 (JP)
(72) Inventor: MAEDA Takuji, Osaka 540-62077 Japan (JP); OHKI Shuichi, Osaka 540-6207 Japan (JP); ORIHASHI Masayuki, Osaka 540-6207 Japan (JP); SHIBATA Osamu, Osaka 540-6207 Japan (JP)
(74) Representative: Eisenführ Speiser
(86) International application number: PCT/JP2018/033902
(87) International publication number: WO 2019/059076

(57) **Abstract**

An information recording device stores data. The information recording device includes a first bus interface and a second bus interface. The first bus interface transmits data to and receives data from an access device according to a first interface scheme. The access device accesses the information recording device. The second bus interface transmits data to and receives data from the access device according to a second interface scheme. The first bus interface and the second bus interface only share wiring of a power supply and wiring of a ground.

## Description

### TECHNICAL FIELD

The present disclosure relates to a removable information recording device that is connected with an access device and writes and reads data, the access device, and an access method for accessing the removable information recording device from the access device.

### BACKGROUND ART

A variety of recording media, such as a magnetic disk, an optical disc, or a magneto-optical disk, are used to record digital data such as music content or video data. From among these recording media, a memory card that uses, as a recording element, a semiconductor memory such as a flash read-only memory (ROM) contributes to a reduction in size of a recording medium. Thus, the memory card has rapidly become widespread principally in small portable devices such as movie cameras, digital still cameras, or mobile telephone terminals.

Such a memory card is connected with an access device via a plurality of signal lines, and implements transmission and reception of a command and data. An example of an interface scheme is a single-ended scheme. The single-ended scheme has a feature by which a command and data can be transmitted and received between a memory card and an access device by using a simple mechanism, but has a feature by which it is difficult to achieve speeding-up.

As a result of an increase in size of data handled by an access device, such as a high-definition moving image or a still image, and an increase in capacity of a memory card, it is requested that a transfer rate between the memory card and the access device be increased, and a method has been proposed for speeding up an interface in a state where the interface is compatible with a memory card of the single-ended scheme. PTL 1 discloses a technique for achieving the speeding-up of an interface in a state where the interface keeps compatible with a conventional access device, by combining a differential scheme that enables speeding-up while maintaining a conventional signal line of the single-ended scheme.

In addition, an example of a memory card that has solved a similar problem is an ultra high speed II (UHS-II) secure digital (SD) memory card that is a high-speed version of an SD memory card. NPL 1 discloses pin layout of the UHS-II SD memory card. The pin layout has a feature by which pins in a second row that are principally used in a high-speed UHS-II interface of the differential scheme are provided in addition to pins in a first row that are principally used in a conventional interface of the single-ended scheme.

### Citation List

### Patent Literature

PTL 1: Unexamined Japanese Patent Publication No. 2009-93445

### Non-Patent Literature

NPL 1: SD Specifications Part 1, Physical Layer Simplified Specification Version 6.00, SD Card Association, Issued April 10, 2017, pp. 11-13

### SUMMARY OF THE INVENTION

### Technical problems

In conventional techniques disclosed in PTL 1 and NPL 1, in the single-ended scheme, an access device can access a memory card by only using pins in a first row. However, in a high-speed differential scheme, it is requested that the access device access the memory card by using some of the pins in the first row in addition to pins in a second row. For example, in the case of the UHS-II SD memory card disclosed in NPL 1, VDD1, VSS, DAT0/RCLK+, and DAT1/RCLK- in the first row are also used in access according to the differential scheme. It is relatively easy to share VSS1 that supplies power as a common power supply voltage and VSS that is a ground. However, DAT0 and DAT1 that are used as signal lines according to the single-ended scheme are assigned to RCLK+ and RCLK- that are used to input a differential clock according to the differential scheme. Therefore, it is requested that these two pins be used while usage is switched. Thus, a host controller conforming to UHS-II is internally provided with a switch, and the host controller mounts a mechanism of switching whether a signal line will be used according to the single-ended scheme or the differential scheme.

In a case where a new controller, such as a host controller conforming to UHS-II, is developed, a conventional scheme can also be conformed to. However, problems arise, for example, in a case where a memory card is implemented in which existing interface schemes, such as a conventional SD interface serving as the single-ended scheme and peripheral component interconnect express (PCI Express) that is a high-speed differential scheme, have been combined. As in a UHS-II SD memory card, in a case where pins in a first row are used for a conventional SD interface of the single-ended scheme and pins in a second row are used for PCI Express that is a differential scheme, when some of the pins in the first row are shared, it is requested that a part such as a bus switch be mounted outside an existing controller on a side of an access device and that pins on a side of the memory card that will be connected to pins on a side of the controller be switched.

In this case, in the case of a small-sized access device such as a smartphone, mounting an additional part on a side of the access device significantly affects implementation. Further, in a case where an attempt is made to implement a switch inside a new controller, it is requested that a new controller be developed in order to conform to the memory card described above, and this more significantly affects implementation.

In view of the problems described above, the present disclosure achieves high-speed access to a memory card, by including a conventional low-speed access interface in order to maintain compatibility with a conventional access device, and also including a high-speed interface in parallel to the conventional low-speed access interface. Further, the present disclosure provides a method for mounting minimum additional parts on a side of the access device.

### Solution to problems

In order to solve the problems described above, an information recording device according to the present disclosure is an information recording device that stores data. The information recording device includes a first bus interface that transmits data to and receives data from an access device according to a first interface scheme, the access device accessing the information recording device, and a second bus interface that transmits data to and receives data from the access device according to a second interface scheme. The first bus interface and the second bus interface only share wiring of a power supply and wiring of a ground.

In addition, an access device according to the present disclosure is an access device that accesses an information recording device that stores data. The access device includes a first bus interface that transmits data to and receives data from the information recording device according to a first interface scheme, and a second bus interface that transmits data to and receives data from the information recording device according to a second interface scheme. The first bus interface and the second bus interface only share wiring of a power supply and wiring of a ground.

Further, an access method according to the present disclosure is an access method for accessing an information recording device that stores data. In the access method, access is performed via a first bus interface according to a first interface scheme between the information recording device and an access device that accesses the information recording device, and access is performed via a second bus interface according to a second interface scheme. In the first interface scheme and the second interface scheme, wiring of a ground is shared, and the access device supplies power to the information recording device by using common wiring.

### Advantageous effect of invention

By employing an information recording device conforming to a plurality of interfaces and an access device according to the present disclosure, a mounting load can be reduced on a side of the access device, and an information recording device can be implemented that includes a high-speed interface while maintaining compatibility with a conventional access device.

### BRIEF DESCRIPTION OF DRAWINGS

FIG. 1 is a diagram illustrating configurations of an access device and an information recording device according to an exemplary embodiment of the present disclosure.
FIG. 2 is a diagram illustrating pin layout of a conventional UHS-II SD memory card.
FIG. 3 is a diagram illustrating a first example of pin layout of an information recording device according to the present disclosure.
FIG. 4 is a diagram illustrating a first example of a connection between the information recording device and an access device according to the present disclosure.
FIG. 5 is a diagram illustrating a second example of pin layout of the information recording device according to the present disclosure.
FIG. 6 is a diagram illustrating a second example of a connection between the information recording device and the access device according to the present disclosure.
FIG. 7 is a diagram illustrating a third example of pin layout of the information recording device according to the present disclosure.
FIG. 8 is a diagram illustrating a third example of a connection between the information recording device and the access device according to the present disclosure.
FIG. 9 is a diagram illustrating a fourth example of pin layout of the information recording device according to the present disclosure.
FIG. 10 is a diagram illustrating a fourth example of a connection between the information recording device and the access device according to the present disclosure.
FIG. 11 is a diagram illustrating an example where reading or writing is performed in parallel to a PCI Express interface by only using a CMD pin and an SDCLK pin in the fourth example of pin layout of the information recording device according to the present disclosure.

### DESCRIPTION OF EMBODIMENTS

Exemplary embodiments are described in detail below with reference to the drawings as appropriate. However, an unnecessarily detailed description may be omitted. For example, a detailed description of well-known matters or a duplicate description of substantially the same configuration may be omitted. This is to avoid unnecessary redundancy in the description below and to make the description below easily understandable to those skilled in the art.

Note that the inventors provide the accompanying drawings and the description below to help those skilled in the art to fully understand the present disclosure, and the inventors do not intend to use the accompanying drawings or the description below to limit the subject matter described in the claims.

An exemplary embodiment of the present disclosure is described below with reference to the accompanying drawings.

### (Exemplary embodiment)

### [1. Configuration]

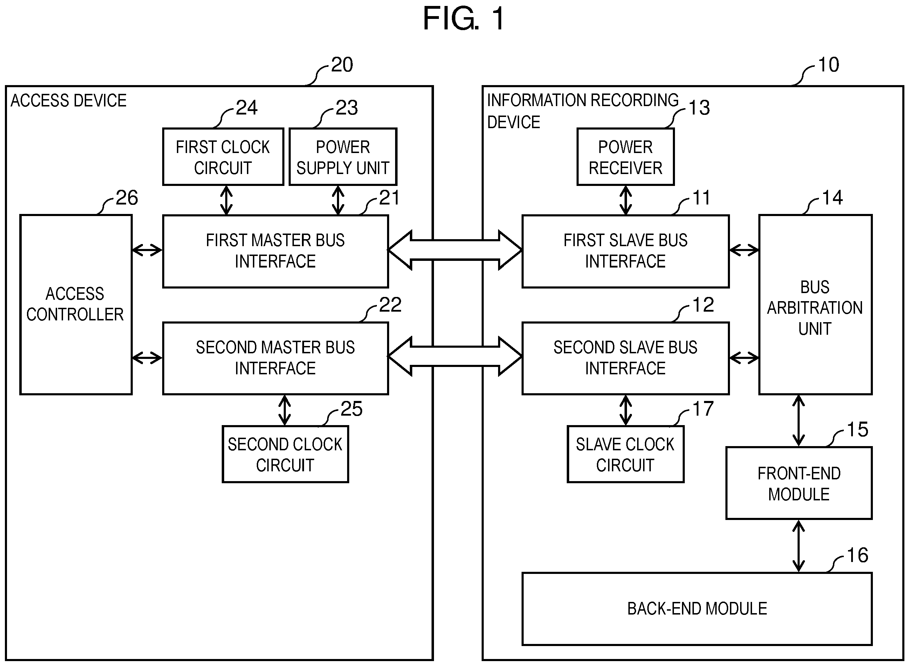

FIG. 1 is a diagram illustrating configurations of access device 20 and information recording device 10 according to an exemplary embodiment of the present disclosure.

As illustrated in FIG. 1, access device 20 can be connected with information recording device 10 by using two types of bus interfaces. Access device 20 can write or read information to or from information recording device 10 by using the bus interfaces. Examples of access device 20 include a smartphone, a tablet, a mobile telephone, a digital still camera, a video camera, and the like. Examples of information recording device 10 include a memory card and a solid state drive (SSD).

### [1-1. Access device]

As illustrated in FIG. 1, access device 20 includes access controller 26, first master bus interface 21, second master bus interface 22, first clock circuit 24, second clock circuit 25, and power supply unit 23.

Access controller 26 is a controller that controls an entirety of access device 20, and is equivalent, for example, to a system-on-a-chip (SOC) that is mounted on a smartphone or the like. Access controller 26 selects and accesses one of the two bus interfaces in order to achieve access to information recording device 10.

First master bus interface 21 is a conventional bus interface, and is equivalent, for example, to an SD interface (an example of a first bus interface) of the single-ended scheme (an example of a first interface scheme). First master bus interface 21 is connected to first slave bus interface 11 of information recording device 10, and achieves transmission and reception of data by using a conventional bus interface.

Second master bus interface 22 is a high-speed bus interface, and is equivalent, for example, to a PCI Express interface (an example of a second bus interface) of the differential scheme (an example of a second interface scheme). Second master bus interface 22 is connected to second slave bus interface 12 of information recording device 10, and achieves transmission and reception of data by using a high-speed bus interface.

First clock circuit 24 supplies a clock to information recording device 10 via first master bus interface 21. This clock is used as a clock source to be used on a side of information recording device 10 in order to drive a conventional bus interface.

Second clock circuit 25 supplies a clock to information recording device 10 via second master bus interface 22. This clock is used as a clock source that is used on the side of information recording device 10 in order to drive a high-speed bus interface.

Power supply unit 23 supplies power to information recording device 10 via first master bus interface 21. This power is used as power required to control information recording device 10.

### [1-2. Information recording device]

Information recording device 10 includes first slave bus interface 11, second slave bus interface 12, slave clock circuit 17, power receiver 13, bus arbitration unit 14, front-end module 15, and back-end module 16.

First slave bus interface 11 is a conventional bus interface, and is equivalent, for example, to an SD interface of the single-ended scheme. First slave bus interface 11 is connected to first master bus interface 21 of access device 20, and achieves transmission and reception of data by using a conventional bus interface.

Second slave bus interface 12 is a high-speed bus interface, and is equivalent, for example, to a PCI Express interface of the differential scheme. Second slave bus interface 12 is connected to second master bus interface 22 of access device 20, and achieves transmission and reception of data by using a high-speed bus interface.

Slave clock circuit 17 is used as a clock source that is used inside information recording device 10 in a case where a clock is not supplied from a side of access device 20 via a dedicated clock pin when second master bus interface 22 and second slave bus interface 12 transmit data to and receive data from each other by using a high-speed bus interface (details will be described later).

Power receiver 13 provides a function of receiving power that has been supplied to information recording device 10 via first master bus interface 21 and first slave bus interface 11, and supplying the power to respective units in information recording device 10.

Bus arbitration unit 14 is connected to first slave bus interface 11 and second slave bus interface 12, and provides a function of arbitrating between buses.

Front-end module 15 provides a function of interpreting a command from access device 20 that has been received via bus arbitration unit 14 and achieving writing or reading of data. Front-end module 15 is equivalent, for example, to a memory controller in a memory card.

Back-end module 16 provides a function of actually achieving reading or writing of data. Back-end module 16 is equivalent, for example, to a flash memory in a memory card.

### [2. Pin layout of conventional UHS-II SD memory card]

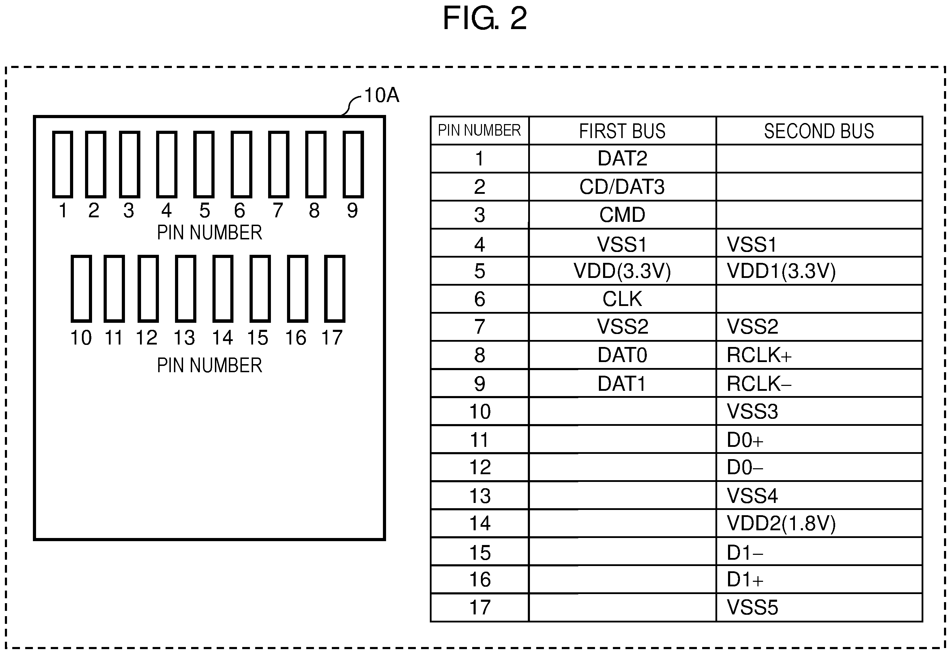

FIG. 2 is a diagram illustrating pin layout of a conventional UHS-II SD memory card (information recording device 10A). The UHS-II SD memory card has a two-row pin layout. 9 pins, pin numbers 1 to 9, are disposed in a first row, and 8 pins, pin numbers 10 to 17, are disposed in a second row.

In FIG. 2, pins indicated in a first bus column in a table are pins that are used in access using a conventional SD interface of the single-ended scheme. Pins indicated in a second bus column in the table are pins that are used in access using a UHS-II interface of the differential scheme.

From among pins that are used for a first bus, VDD (3.3 V) is a pin that is used for the access device to supply a power of 3.3 V to the UHS-II SD memory card. VSS1 and VSS2 are grounds. CLK is a pin that is used for the access device to supply a clock to the UHS-II SD memory card. CMD is a pin that is used for the access device to input a command to the UHS-II SD memory card. DAT0, DAT1, DAT2, and DAT3 are pins that are used to transmit and receive data between the access device and the UHS-II SD memory card. DAT3 is used for card detection (CD) in some cases, but a detailed description is omitted.

From among pins that are used for a second bus, VDD1 (3.3 V), VSS1, and VSS2 are used as a pin that has the same role as a role in the case of access using the conventional SD interface of the single-ended scheme. RCLK+ and RCLK- are pins that are used for the access device to supply a differential clock to the UHS-II SD memory card. VDD2 (1.8 V) is a pin that is used for the access device to additionally supply a power of 1.8 V when the UHS-II interface is used. VSS3, VSS4, and VSS5 are grounds for the UHS-II interface. D0+, D0-, D1+, and D1- are pins that are used as two pairs of differential data signal lines.

As described above, in the UHS-II SD memory card, five pins in total are shared as pins for the first bus in the SD interface of the single-ended scheme and pins for the second bus in the UHS-II SD interface of the differential scheme. VDD1, VSS1, and VSS2 pay the same role in both buses. Therefore, no problems arise even when VDD1, VSS1, and VSS2 are shared. However, DAT0 and DAT1 for the first bus are used as RCLK+ and RCLK- for the second bus, and therefore a switch circuit that switches usage is needed in a host controller on a side of the access device. The switch circuit can be implemented in a case where a host controller is newly designed and developed. However, in a case where an existing host controller is diverted, it is requested that an additional part such as a bus switch be externally mounted, and a problem arises in which a mounting load is imposed on the side of the access device.

The present disclosure discloses a method for achieving access using a high-speed interface of PCI Express while maintaining compatibility with the UHS-II SD memory card, and reducing a mounting load on the side of the access device.

### [3-1. First pin layout]

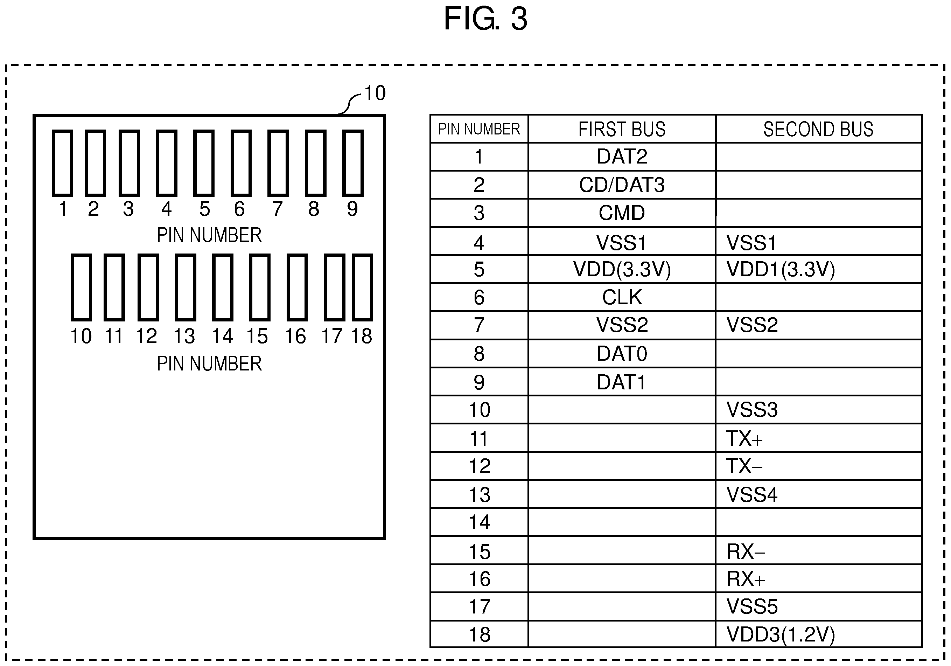

FIG. 3 is a diagram illustrating an example of first pin layout according to the present disclosure.

In FIG. 3, a first bus means, for example, a conventional SD interface of the single-ended scheme, and a second bus means, for example, a PCI Express interface of the differential scheme. 9 pins are disposed in a first row similarly to FIG. 2. However, one pin, pin number 18, is added to pins in a second row.

Layout of respective pins in the first bus is the same as the layout of FIG. 2. In the second bus, VDD1, VSS1, and VSS2 are the same as VDD1, VSS1, and VSS2 in FIG. 2. VSS3, VSS4, and VSS5 are similar to VSS3, VSS4, and VSS5 in FIG. 2. TX+, TX-, RX+, and RX- have names different from names in FIG. 2. However, TX+, TX-, RX+, and RX- mean two differential signal pairs, and correspond to D0+, D0-, D1+, and D1- in FIG. 2.

VDD3 (1.2 V) added as pin number 18 is a pin that is used to supply, to information recording device 10, additional power instead of VDD2 (1.8 V) of FIG. 2. As a result of improvements in a technology of flash memories in recent years, driving by using a power supply of 1.2 V is more effective for performance of a flash memory and a reduction in power consumption than driving by using a power supply of 1.8 V. Therefore, a pin is added under the assumption that a power supply of 1.2 V is added. Thus, in a case where pin number 14 can be shared by a power supply of 1.8 V and a power supply of 1.2 V, implementation may be performed by only using pin number 14 without adding pin number 18. A configuration may be employed in which driving is performed by using a power supply of 1.8 V in pin number 14, as is conventional.

In the first pin layout, a most characteristic point is that a pin that is used for access device 20 to supply a clock to information recording device 10 is not provided in the second bus. Stated another way, in an example of the first pin layout according to the present disclosure, a dedicated clock pin is not provided, and an embedded clock mode is used in which a clock is superimposed onto data pin (TX+, TX-, RX+, RX-) and the clock is supplied from access device 20 to information recording device 10. As described above, it is preferable that a clock to be used in the second interface scheme be supplied by superimposing the clock onto wiring for data transmission and reception that is provided in the second bus interface. In a case where this mode is used, it is requested that slave clock circuit 17 illustrated in FIG. 1 be mounted on a side of information recording device 10, but there is an advantage in which a number of pins between access device 20 and information recording device 10 can be reduced.

As described above, in FIG. 3, shared clock pins for the second bus, as illustrated in the conventional example of FIG. 2, are removed, and only a power supply and grounds are pins that are shared by the first bus and the second bus.

### [3-2. Connection in first pin layout]

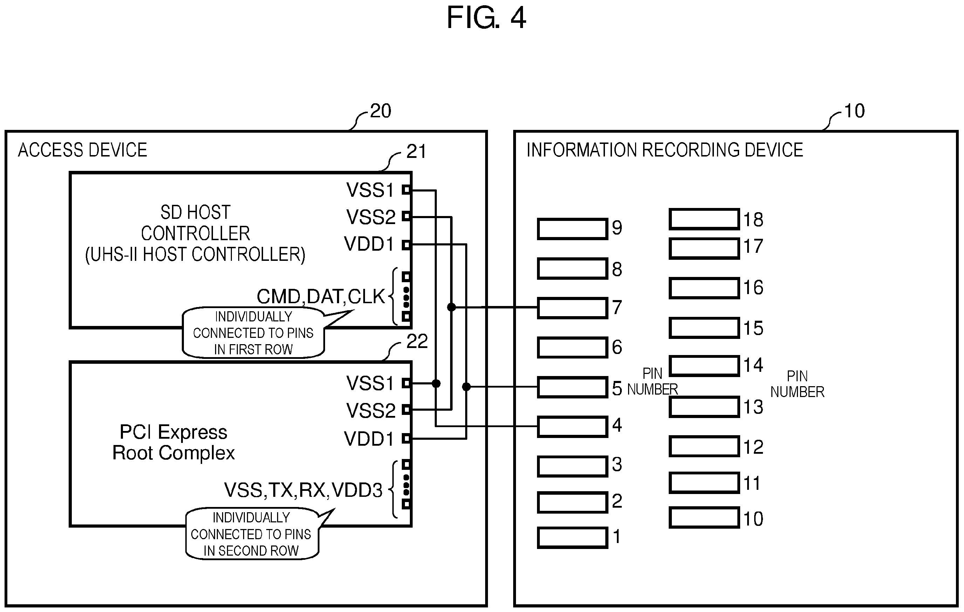

FIG. 4 illustrates an example of a connection between information recording device 10 and access device 20 according to the present disclosure.

As illustrated in FIG. 4, VDD1, VSS1, and VSS2 shared by the first bus and the second bus are directly connected to a VDD terminal and VSS terminals of each of an SD host controller (this corresponds to first master bus interface 21) and a PCI Express Root Complex (a host controller for a PCI Express bus; this corresponds to second master bus interface 22) in access device 20. Further, other pins are individually connected to respective terminals of the SD host controller and the PCI Express Root Complex.

### [3-3. Effects in first pin layout]

By employing such a configuration, existing controllers can be diverted with no change, without mounting an additional part that switches a bus between the SD host controller and the PCI Express Root Complex on a side of the access device.

In addition, VDD1, VSS1, and VSS2 are shared by the first bus and the second bus, and pin layout in the second bus is configured to be as similar as possible to pin layout of a UHS-II SD memory card. By doing this, a number of pins on information recording device 10 can be reduced as much as possible, and information recording device 10 that is one type of removable recording device can be easily implemented.

Further, a clock or a signal line is completely independent in the first bus and the second bus. Therefore, both buses can be simultaneously driven. Stated another way, the first pin layout can be used, for example, in a usage of reading data from information recording device 10 via the second bus while writing data to the information recording device via the first bus.

### [4-1. Second pin layout]

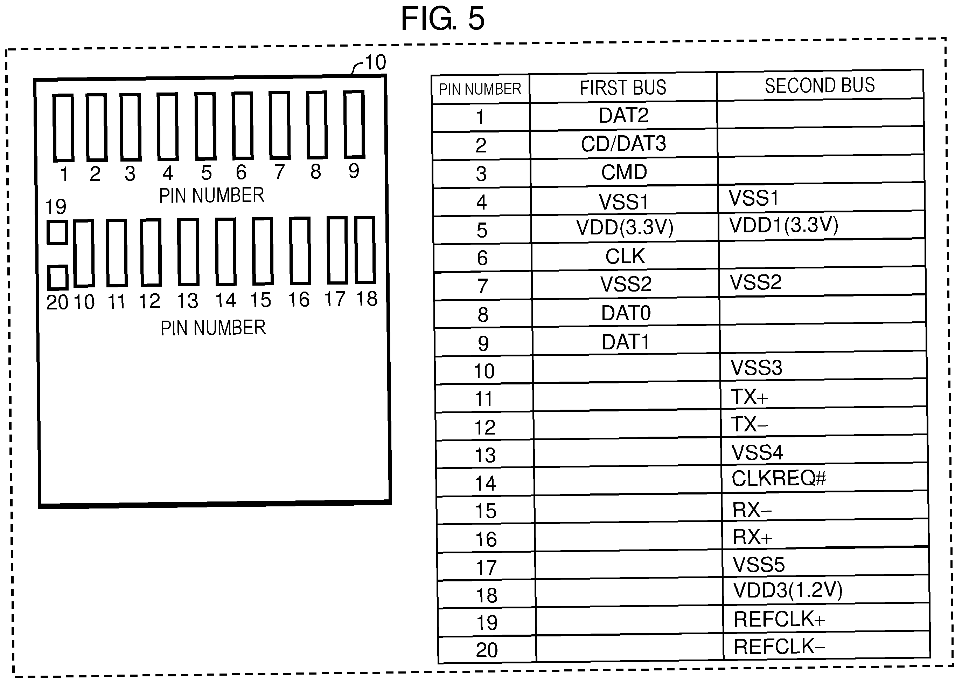

FIG. 5 is a diagram illustrating an example of second pin layout according to the present disclosure.

In FIG. 5, a first bus means, for example, a conventional SD interface of the single-ended scheme, and a second bus means, for example, a PCI Express interface of the differential scheme. 9 pins are disposed in a first row similarly to FIG. 2, and three pins, pin numbers 18 to 20, are added to pins in a second row.

A difference from the example illustrated in FIG. 3 of the first pin layout is only three pins, pin numbers 14, 19, and 20. Pins other than these three pins are used in the same usage as usage in the example of the first pin layout, and therefore a detailed description is omitted.

In the example of the second pin layout, differential clock pins REFCLK+, REFCLK- are disposed as pin numbers 19 and 20. In the example of the first pin layout, a method has been described for accessing an information recording device according to PCI Express by using the embedded clock mode, without using a dedicated differential clock pin. However, in the case of the use of a higher-speed access mode according to PCI Express, it may be difficult to use the embedded clock mode from the viewpoint of signal quality. Therefore, in the example of the second pin layout, a scheme obtained by adding two pins REFCLK+, REFCLK- as dedicated differential clocks is employed. Stated another way, a clock to be used in the second interface scheme may be supplied by using dedicated clock wiring provided in a second bus interface. Further, CLKREQ# that controls an ON state or an OFF state of a clock signal in order to control power is assigned to pin number 14 as dedicated wiring.

As described above, in FIG. 5, shared clock pins for the second bus, as illustrated in the conventional example of FIG. 2, are removed, and only a power supply and grounds are pins that are shared by the first bus and the second bus.

### [4-2. Connection in second pin layout]

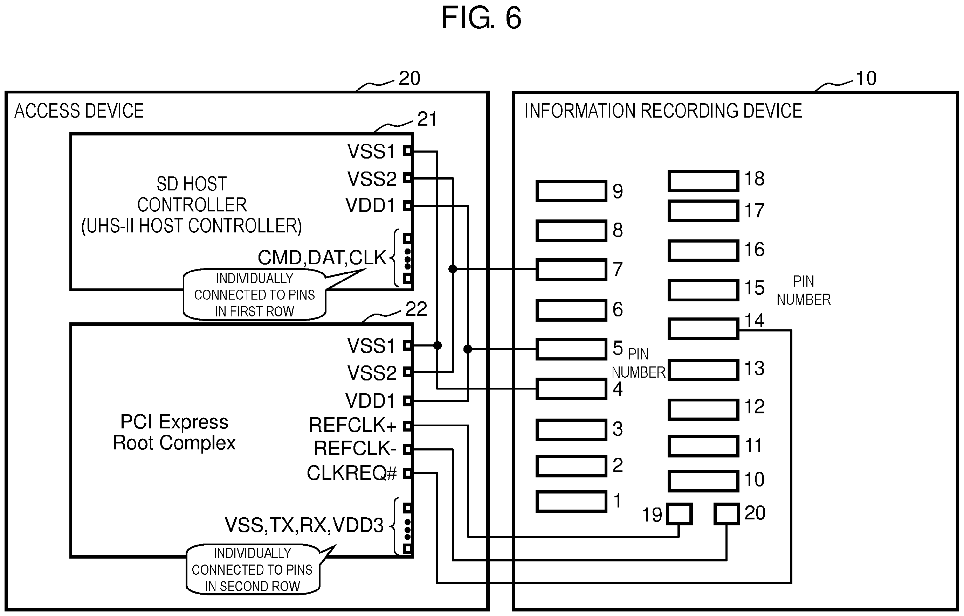

FIG. 6 illustrates an example of a connection between information recording device 10 and access device 20 according to the present disclosure.

As illustrated in FIG. 6, VDD1, VSS1, and VSS2 shared by the first bus and the second bus are directly connected to a VDD terminal and VSS terminals of each of an SD host controller (this corresponds to first master bus interface 21) and a PCI Express Root Complex (this corresponds to second master bus interface 22) in access device 20. Further, other pins are individually connected to respective terminals of the SD host controller and the PCI Express Root Complex. Three pins REFCLK+, REFCLK-, CLKREQ# that are used for clock supply or clock control according to PCI Express are also provided as pins in the second row of information recording device 10, and are individually connected to access device 20.

### [4-3. Effect in second pin layout]

By employing such a configuration, existing controllers can be diverted with no change, without mounting an additional part that switches a bus between the SD host controller and the PCI Express Root Complex on a side of the access device (terminals of REFCLK+, REFCLK-, and CLKREQ# of an existing PCI Express Root Complex can be directly connected to pins in the second row of information recording device 10).

### [5-1. Example of third pin layout]

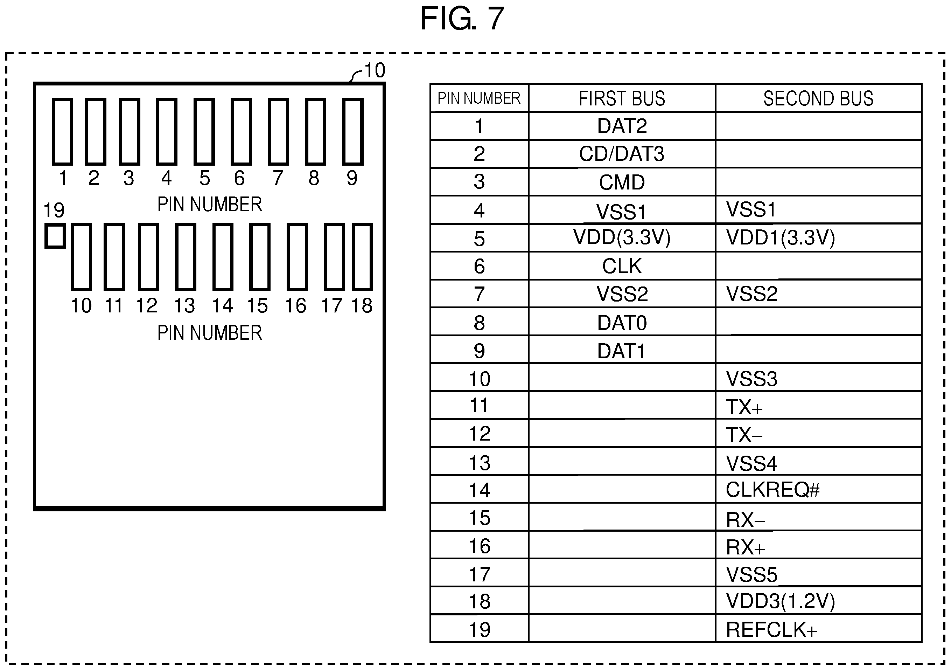

FIG. 7 is a diagram illustrating an example of third pin layout according to the present disclosure.

In FIG. 7, a first bus means, for example, a conventional SD interface of the single-ended scheme, and a second bus means, for example, a PCI Express interface of the differential scheme. 9 pins are disposed in a first row similarly to FIG. 2, and two pins, pin numbers 18 and 19, are added to pins in a second row.

A difference from the example illustrated in FIG. 5 of the second pin layout is only the absence of pin number 20. Pins other than pin number 20 are used in the same usage as usage in the example of the second pin layout, and therefore a detailed description is omitted.

### [5-2. Connection in third pin layout]

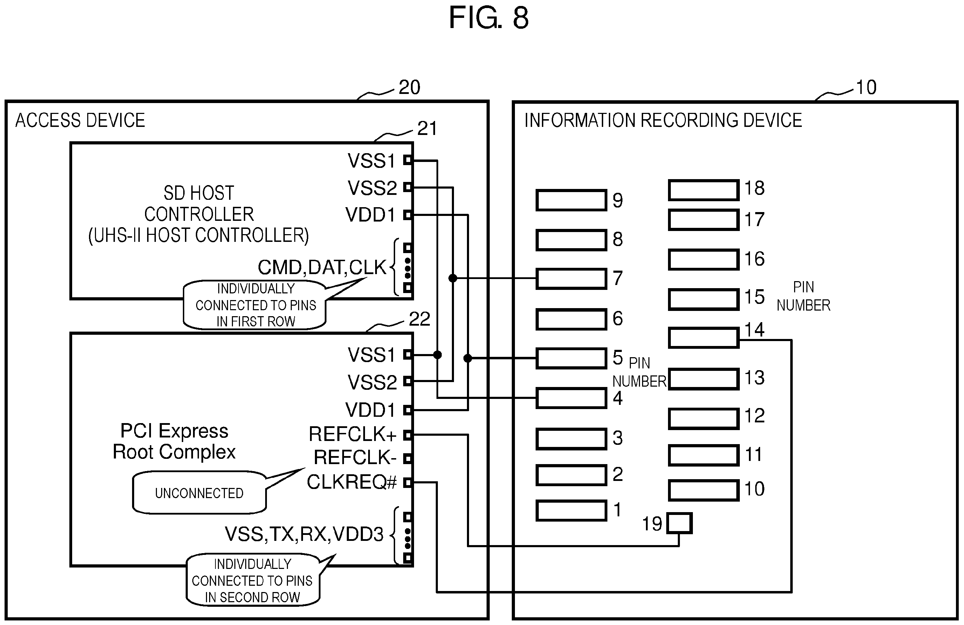

In the example of the third pin layout, differential clock pin REFCLK-is not assigned, and does not connect access device 20 and information recording device 10. Stated another way, as illustrated in FIG. 8, an REFCKL- terminal on a side of access device 20 is not connected to information recording device 10. A clock receiving circuit on a side of information recording device 10 is implemented in such a way that information recording device 10 only receives, as an input, one pin of a differential clock pair of access device 20 and causes the input to operate as a single-ended clock. As described above, a scheme may be employed in which only one of two signals of the differential clock pair is used in a connection between the access device and the information recording device and the signal is treated as a single-ended clock signal on a side of the information recording device.

### [5-3. Effect in third pin layout]

As described above, in FIG. 7, shared clock pins for the second bus, as illustrated in the conventional example of FIG. 2, are removed, and only a power supply and grounds are pins that are shared by the first bus and the second bus. In addition, as illustrated in FIG. 8, access device 20 and information recording device 10 are connected to each other in a form obtained by further removing one pin REFCLK- from the example of the second pin layout. Therefore, a connection between access device 20 and information recording device 10 can be implemented by using a smaller number of pins.

### [6-1. Fourth pin layout]

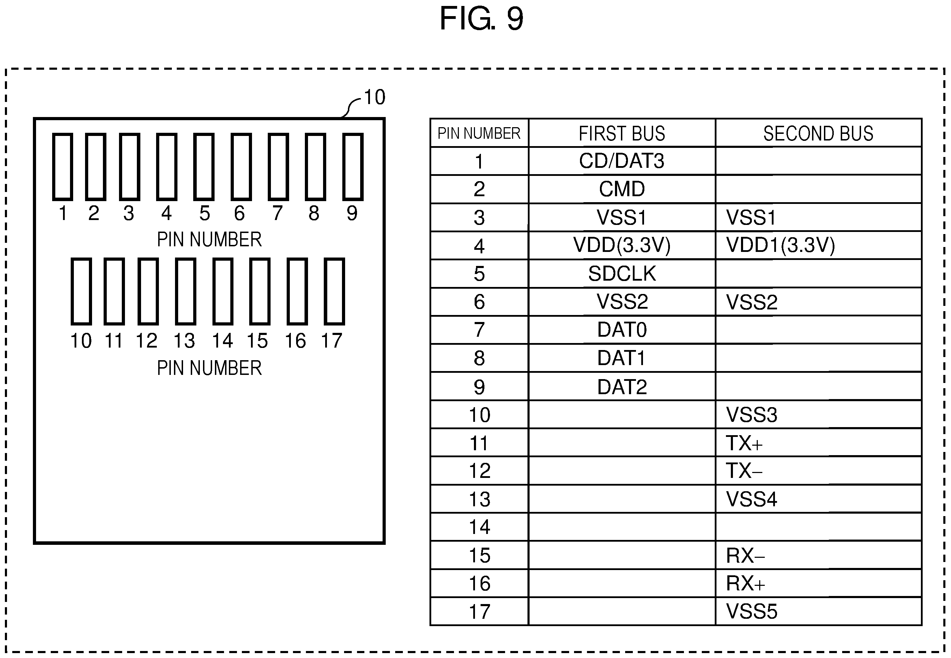

In FIG. 9, a first bus means, for example, a conventional SD interface of the single-ended scheme, and a second bus means, for example, a PCI Express interface of the differential scheme.

As illustrated in FIG. 9, fourth pin layout is different in that, for example, a PCI Express interface of the differential scheme is handled even in the case of the pin layout illustrated in FIG. 2 of a conventional UHS-II SD memory card. In particular, the fourth pin layout has one feature in which CMD (Pin #2) and SDCLK (Pin #5) are not assigned to the PCI Express interface. Here, CMD is a pin that is used for access device 20 to input a command to information recording device 10, and SDCLK is a pin that is used for access device 20 to supply a clock to information recording device 10.

### [6-2. Connection in fourth pin layout]

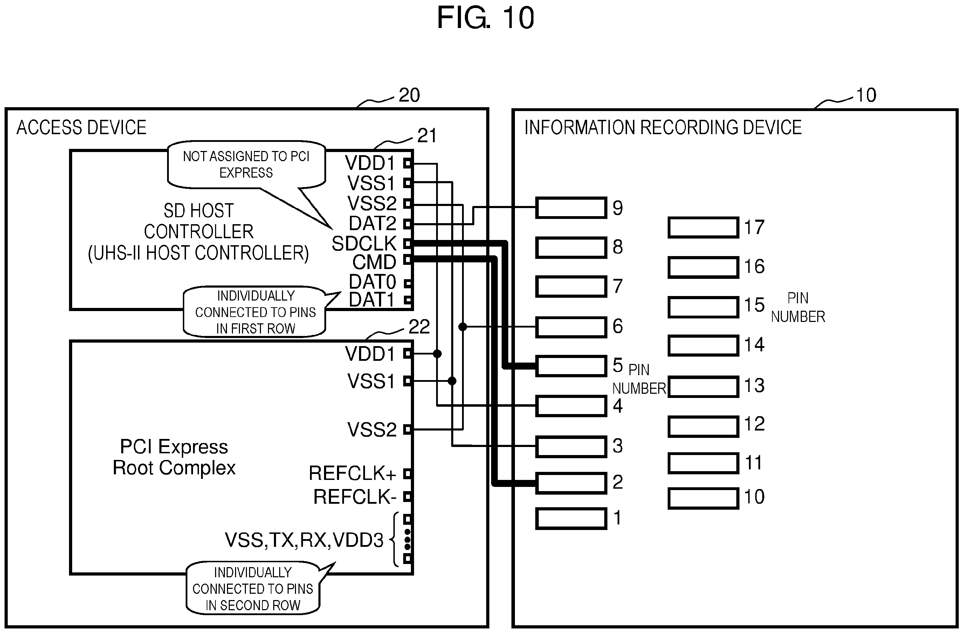

In an example of the fourth pin layout, CMD and SDCLK of the SD interface are not shared with the PCI Express interface. Stated another way, as illustrated in FIG. 10, a CMD pin and an SDCLK pin of information recording device 10 are only connected to a CMD terminal and an SDCLK terminal of an SD host controller (this corresponds to first master bus interface 21) on a side of access device 20, and the CMD pin and the SDCLK pin are not connected to a PCI Express Root Complex (this corresponds to second master bus interface 22).

### [6-3. Effects in fourth pin layout]

By employing the fourth pin layout and operation, existing controllers can be diverted with no change, without mounting an additional part that switches a bus between the SD host controller and the PCI Express Root Complex on a side of access device 20.

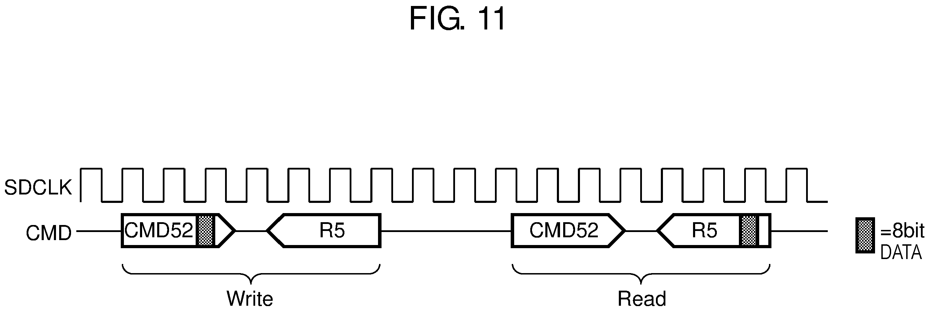

In addition, in the fourth pin layout, CMD52 that is a command according to an SD input output (SDIO) standard is used, as illustrated in FIG. 11, and therefore reading or writing of an 8-bit unit can be performed in parallel to the PCI Express interface by only using the CMD pin and the SDCLK pin.

### [7. Access to high-speed bus interface by using existing host controllers]

As described in the first to third pin layout examples, according to the present disclosure, from among pins for a PCI Express interface, pins other than a power source and a ground are independently disposed in a second row in a state where pins in a first row keep compatible with a conventional SD interface. This enables access to both interfaces by diverting existing host controllers mounted in access device 20.

In addition, pins for both interfaces are independently disposed, and therefore the present disclosure can be employed for a usage of simultaneously using both interfaces.

### (Other exemplary embodiments)

As described above, the exemplary embodiment has been described as an example of the technique disclosed in the present application. However, the technique of the present disclosure is not limited to the exemplary embodiment, and is also applicable to other exemplary embodiments that undergo modifications, replacements, additions, omissions, or the like, as appropriate. A new exemplary embodiment can also be made by combining respective components described in the exemplary embodiment above. Thus, other exemplary embodiments are described below as examples.

In the exemplary embodiment described above, a method for assigning a differential signal pair to pins, as indicated as REFCLK+ and REFCLK-, has been disclosed. It is preferable that the differential signal pair be disposed in positions adjacent to each other. However, the differential signal pair may be assigned to positions that are not positions in the examples of pin layout that have been described in the present disclosure. The differential signal pair may be disposed with attributes of + and - reversed.

A case has been described where PCI Express is employed as a high-speed interface. However, another high-speed interface such as universal serial bus (USB) 3.0 may be employed.

In the second pin layout and the third pin layout, a case where CLKREQ# is used has been described. However, for example, in a case where low power consumption control is not needed, CLKREQ# does not always need to be used, and CLKREQ# may not be assigned.

The fourth pin layout has been described under the assumption that a total number of pins is 17. However, as described in the example of the third pin layout, a configuration may be employed in which pin numbers 18 and 19 are added as an extension power supply terminal and an extension terminal, respectively, and a CMD terminal and an SDCLK terminal are not shared with a signal line of the PCI Express interface.

In the access device and the information recording device described in the exemplary embodiment above, respective processing units may be individually formed as a single chip by using a semiconductor device such as a large-scale integration (LSI). Alternatively, some or all of the respective processing units may be formed as a single chip.

The LSI has been described here as an example of the semiconductor device. However, the semiconductor device may also be referred to as an integrated circuit (IC), a system LSI, a super LSI, or an ultra LSI depending on a degree of integration.

A method for circuit integration is not limited to the LSI, and circuit integration may be implemented by a dedicated circuit or a general-purpose processor. A field programmable gate array (FPGA) or a reconfigurable processor may be used. The FPGA is programmable after the manufacture of the LSI. In the reconfigurable processor, connection or settings of circuit cells inside the LSI are reconfigurable.

Furthermore, if any circuit integration technology that can replace the LSI emerges due to the advance of a semiconductor technology or other derivative technologies, naturally, such a technology may be used to integrate functional blocks. For example, biotechnology may be applied.

Respective processes in the exemplary embodiment described above may be implemented by hardware, or may be implemented by software. Alternatively, the respective processes may be implemented by a combination of software and hardware. In a case where the access device and the information recording device according to the exemplary embodiment described above are implemented by hardware, it goes without saying that timings at which the respective processes are performed need to be adjusted. For convenience of description, in the exemplary embodiment described above, details of timing adjustment of various signals required in an actual hardware design are omitted.

As described above, the exemplary embodiments have been described as examples of the technique of the present disclosure. For this purpose, the accompanying drawings and the detailed description have been provided.

Accordingly, in order to exemplify the technique described above, the components illustrated or described in the accompanying drawings and the detailed description may not only include components that are essential for solving the problems, but may also include components that are not essential for solving the problems. Therefore, the unessential components should not be deemed essential just because the unessential components are illustrated or described in the accompanying drawings and the detailed description.

The exemplary embodiments described above are provided to exemplify the technique according to the present disclosure. Therefore, it is possible to make various changes, replacements, additions, omissions, or the like within the scope of the claims and equivalents thereof.

### INDUSTRIAL APPLICABILITY

The present disclosure is useful for an information recording device that mounts a plurality of interfaces and an access device that accesses the information recording device.

### REFERENCE MARKS IN THE DRAWINGS

- 10, 10A: information recording device
- 11: first slave bus interface
- 12: second slave bus interface
- 13: power receiver
- 14: bus arbitration unit
- 15: front-end module
- 16: back-end module
- 17: slave clock circuit
- 20: access device
- 21: first master bus interface
- 22: second master bus interface
- 23: power supply unit
- 24: first clock circuit
- 25: second clock circuit
- 26: access controller

## Claims

1. An information recording device that stores data, the information recording device comprising:
a first bus interface that transmits data to and receives data from an access device according to a first interface scheme, the access device accessing the information recording device; and
a second bus interface that transmits data to and receives data from the access device according to a second interface scheme,
wherein the first bus interface and the second bus interface only share wiring of a power supply and wiring of a ground.

2. The information recording device according to claim 1, wherein a clock to be used in the second interface scheme is supplied by superimposing the clock onto wiring for data transmission and reception, the wiring being provided in the second bus interface.

3. The information recording device according to claim 1, wherein a clock to be used in the second interface scheme is supplied by using dedicated clock wiring provided in the second bus interface.

4. The information recording device according to claim 3, further comprising
dedicated wiring that controls whether to supply the clock.

5. The information recording device according to claim 1, wherein when a clock to be used in the second interface scheme is supplied by using dedicated clock wiring provided in the second bus interface, only one of two pieces of wiring of a differential clock pair is connected to the information recording device, the differential clock pair being supplied by the access device.

6. The information recording device according to claim 1, wherein from among all pins, at least a pin that is used for the access device to input a command to the information recording device according to the first interface scheme, and a pin that is used for the access device to supply a clock to the information recording device according to the first interface scheme are not shared with a signal line according to the second interface scheme.

7. The information recording device according to claim 1, wherein in the first interface scheme, communication is performed by only using two pins, the two pins including a pin that is used for the access device to input a command to the information recording device and a pin that is used for the access device to supply a clock to the information recording device.

8. The information recording device according to any one of claims 1 to 7, wherein
the first bus interface is a secure digital (SD) bus interface, and
the second bus interface is a peripheral component interconnect express (PCI Express) bus interface.

9. The information recording device according to any one of claims 1 to 7, wherein the first bus interface and the second bus interface are simultaneously used, and the information recording device is accessed by the access device via the first bus interface and the second bus interface.

10. An access device that accesses an information recording device that stores data, the access device comprising:
a first bus interface that transmits data to and receives data from the information recording device according to a first interface scheme; and
a second bus interface that transmits data to and receives data from the information recording device according to a second interface scheme,
wherein the first bus interface and the second bus interface only share wiring of a power supply and wiring of a ground.

11. The access device according to claim 10, wherein a clock to be used in the second interface scheme is supplied by superimposing the clock onto wiring for data transmission and reception, the wiring being provided in the second bus interface.

12. The access device according to claim 10, wherein a clock to be used in the second interface scheme is supplied by using dedicated clock wiring provided in the second bus interface.

13. The access device according to claim 12, further comprising
dedicated wiring that controls whether to supply the clock.

14. The access device according to claim 10, wherein when a clock to be used in the second interface scheme is supplied by using dedicated clock wiring provided in the second bus interface, only one of two pieces of wiring of a differential clock pair is connected to the information recording device, the differential clock pair being supplied by the access device.

15. The access device according to claim 10, wherein from among all pins, at least a pin that is used for the access device to input a command to the information recording device according to the first interface scheme, and a pin that is used for the access device to supply a clock to the information recording device according to the first interface scheme are not shared with a signal line according to the second interface scheme.

16. The access device according to claim 10, wherein in the first interface scheme, communication is performed by only using two pins, the two pins including a pin that is used for the access device to input a command to the information recording device and a pin that is used for the access device to supply a clock to the information recording device.

17. The access device according to any one of claims 10 to 16, wherein
the first bus interface is a secure digital (SD) bus interface, and
the second bus interface is a peripheral component interconnect express (PCI Express) bus interface.

18. The access device according to any one of claims 10 to 16, wherein the first bus interface and the second bus interface are simultaneously used, and the access device accesses the information recording device via the first bus interface and the second bus interface.

19. An access method for accessing an information recording device that stores data, the access method comprising:
performing access between the information recording device and an access device via a first bus interface according to a first interface scheme, the access device accessing the information recording device;
performing access between the information recording device and the access device via a second bus interface according to a second interface scheme; and
sharing wiring of a ground in the first interface scheme and the second interface scheme, and supplying power from the access device to the information recording device by using common wiring.
